Europäisches Patentamt

European Patent Office

Office européen des brevets

(11) Publication number: **0 221 672**
**A2**

(12) **EUROPEAN PATENT APPLICATION**

(21) Application number: **86307532.1**

(22) Date of filing: **01.10.86**

(51) Int.Cl.⁴: **H 02 G 3/02**

(30) Priority: **02.10.85 GB 8524325**

(43) Date of publication of application:
**13.05.87 Bulletin 87/20**

(84) Designated Contracting States:
**AT BE CH DE ES FR GR IT LI LU NL SE**

(71) Applicant: **Ranton & Company Limited**
**Rock Works Commerce Road**
**Brentford Middlesex TW8 8LN(GB)**

(72) Inventor: **Cooke, Alan John**
**48 Lynton Close**
**Isleworth Middlesex, TW7 7ET(GB)**

(72) Inventor: **Gearing, Hugh Jonathon**
**35 Eve Road**
**Isleworth Middlesex TW7 7HS(GB)**

(74) Representative: **Cardwell, Stuart Martin et al,**
**Roystons Tower Building Water Street**
**Liverpool, Merseyside L3 1BA(GB)**

(54) **Electrical accessories.**

(57) A mains electrical outlet system of plug-and-socket type wherein mating plug (100, 202) and socket (200) devices afford not only normal live and neutral connections (19, 20) together with any normal earth connection (43) but also an additional connection (20A). Single phase mains electrical installations (Figures 14 - 17) utilise the additional connection for operation of load means in accordance with switch means and further control means, for example triggered subsidiary loads, secondarily controlled loads, emergency battery pack lighting, and fluorescent dimming.

FIG. 1

FIG. 8

FIG. 13

EP 0 221 672 A2

1

Title:  Electrical Accessories

DESCRIPTION

This invention relates to electrical accessories and has particular application to plug-and-socket systems for use as mains electricity outlets.

We have successfully developed such a system, specifically for application to lighting outlets, see our patent application no. 8411530 (published 2139433A), utilising mating plug and socket devices that require engagement by entry of plug pins with socket holes and subsequent achievement of electrical connection by rectilinear relative movement. That system is capable of particularly safe implementation in terms of denying access to live socket parts especially where live and neutral plug pins are L-shaped to mate with contacts displaced from the socket holes; and can afford good mechanical strength against separation of plug and socket devices when in mutual electrical connection especially where further headed plug protrusions (one of which may conveniently be an earth pin) engage in suitably configured slots in the socket. That system is well suited to replacing

2

ceiling roses as a lighting outlet system; is further well adapted to other connections of lighting and other electrical units, whether on ceilings or on walls or wherever; and can usefully afford a generally compact plug-and-socket mains outlet system alternative to those already well-known and in common use.

Clearly, other systems are feasible that achieve at least some of the advantages of our aforementioned system and at least in relation to providing relatively fixed and removable devices cooperating in an advantageous protocol for mains electrical lighting outlets. It is likely that, just as for our own systems , any such system will meet with intense interest not only as to its capability of application physically to lighting units but also as to its general potential electricially, particularly in relation to single phase electrical supply systems and individual outlets each to a load unit or unit with alternative loads requiring more than simple switch control.

It is in relation to expanding the latter potential that this invention has its origin, particularly from our appreciation that a radical departure was required from existing mains electrical outlet systems and their long-standing conventional provision of at most three-pin/socket connections, i.e.

for live and neutral and additionally for earth where required or desired. For example, emergency lighting units capable of secondary or alternative powering from a local battery normally require the latter to be of rechargeable type kept "topped-up" by mains electricity, and thus additional provision for live supply thereto available hitherto only via connector blocks in an accessory outlet box.

According to this invention, a mains electrical outlet system of plug-and-socket type is provided with a connection made at mating of plug-and-socket devices, which connection is additional to normal live and neutral connections and any earth connection also then made. Such outlet system and constituent plug and socket devices are unrelated to other special-purpose systems such as previously employed for electronics connections, which are generally unsuited to mains outlet use, and to special connectors for multiple-phase mains supplies, which have long been known without leading to their use as herein, particularly in single-phase installations to loads controlled further then by simple switching.

The additional connection hereof is useful as a second live mains connection and need not be included in switching provisions, say for an emergency lighting

4

unit whose local battery requires permanent mains connection. Another application could be to providing a dimmer facility for fluorescent lighting units, when only one live wire would have a variable dimmer unit or element but both could be switched together as desired or required. Further applications include operation under additional or alternative control by means other than normal switching, for example from presence-sensors for automatic switch-on and/or from related delay devices for switch-off, or relative to equipment with triggering provision as for fans in toilets etc. No doubt, other applications will arise for such a plug-and-scoket outlet system for example in taking both a mains feed and some other signal to a device or system.

The additional connection may be similar to another existing connection, such as the normal live connector, and its related pin and socket will be relatively displaced, preferably in two directions to assist surety against misengagement of plug and socket devices.

In relation to our aforementioned system, we prefer to implement the additional connection via a similar L-shaped plug pin to the existing live and neutral pins, and a corresponding socket entry and

5

relatively displaced socket contact therefore, i.e. so that all connection/disconnection and entry/removal of plug pins relative to socket entries are done simultaneously and in the same way. Alternatively, however, the additional connection could be via a headed pin similar to our preferred earth connection pin, and a suitable entry/contact provision on the socket device; or as a U-shaped pin and corresponding entry/socket provision as mentioned in our above patent application. However, it is quite feasible to have greater dissimilarity between the additional and normal connections, for example onto or at a side of the plug device relative to a protrusion from the socket device, say as a side-extension from the plug device into a slot in a socket device protrusion, or otherwise as convenient or desired.

Basically, we see embodiment of this invention as possible in terms of modifications of any plug-and-socket system hitherto offering conventional (three or less pin) mains connections, to have an additional connection, whether in the same way as the latter or a different way compatible with simultaneous achievement of electrical contact, though we accept that such provision, for established systems, might require unacceptable redesign/retooling. Thus, an

6

important achievable advantage hereof is that established standard fixing boxes/plates, etc. should continue to be applicable to embodiments hereof, whether in relation to existing British standard practice (as is inevitably considered in what will be specifically described) or in relation to redesign to conform with other standard practices elsewhere.

Specific implementation of this invention will now be described, by way of example, with reference to the accompanying drawings, in which:

Figure 1 is an internal plan view of a socket unit with a cover part removed;

Figure 2 is a sectional view on line A-A of Figure 1;

Figure 3 is a sectional view on line B-B of Figure 1;

Figure 4 is a plan view of the connection face of the same socket unit;

Figure 5 is an end view of the same socket unit;

Figure 6 is a rear view showing incorporation of the socket unit of Figures 1 to 5 into a face plate;

Figure 7 is a front view showing integration of socket provisions into a face plate;

Figure 8 is an internal plan view of a plug unit with a cover part removed;

Figure 9 is a sectional view on line C-C of Figure 8;

Figure 10 is a sectional view on line D-D of Figure 8;

Figure 11 is a plan view of the connection face of the same coupler or plug unit;

Figure 12 is an end view of the same unit;

Figure 13 is an exploded side view of a typical ceiling rose type device hereof utilising the face plate of Figures 6 and 7; and

Figures 14 to 17 shows various installations in single phase mains electrical systems.

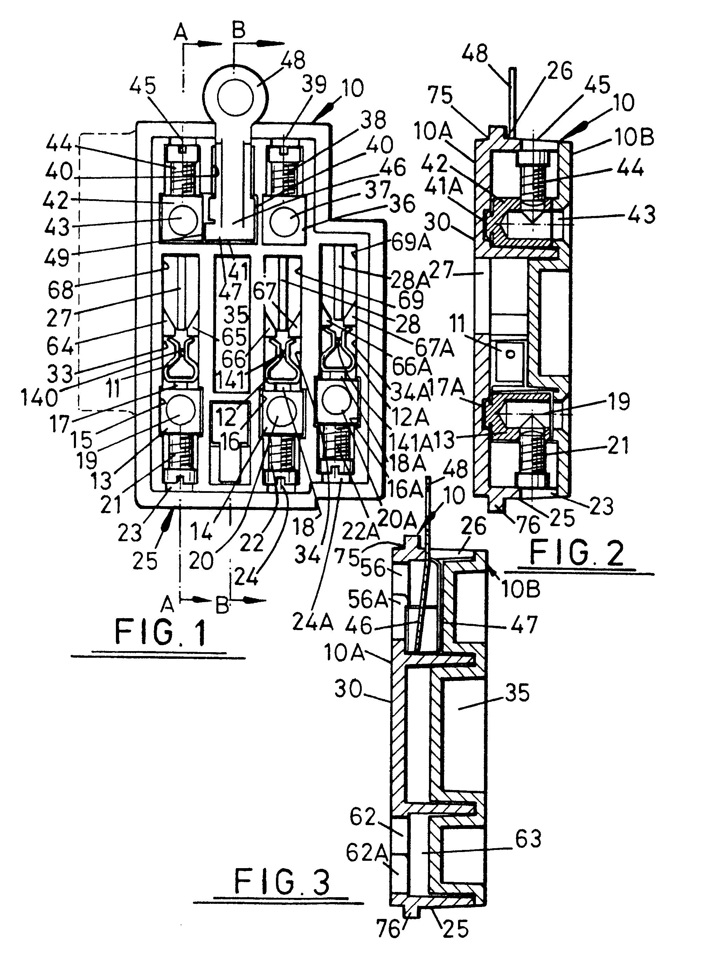

Referring first to Figures 1 to 5, a socket unit is shown at 10 comprising internal contacts 11, 12, 12A on terminal blocks 13, 14, 14A for neutral/line and additional line, "i.e."live", connections. The blocks 13, 14, 14A are located in wells 15, 16, 16A and have tongues 17, 18 18A rivetted to the blocks and carrying the contacts 11, 12, 12A extending therefrom as spring jaws. The .blocks 13, 14, 14A are shown with wire-receiving holes 19, 20, 20A and transverse clamp-screws 21, 22, 22A accessible through holes 23, 24, 24A in one end 25 of what is a generally elongated cuboid box 10A extended to one side and cover 10B. The terminal blocks 13, 14, 14A and associated terminals 11, 12, 12A are shown within that part of the socket 10 extending from its end-wall 25 and in spaced side-by-side relation.

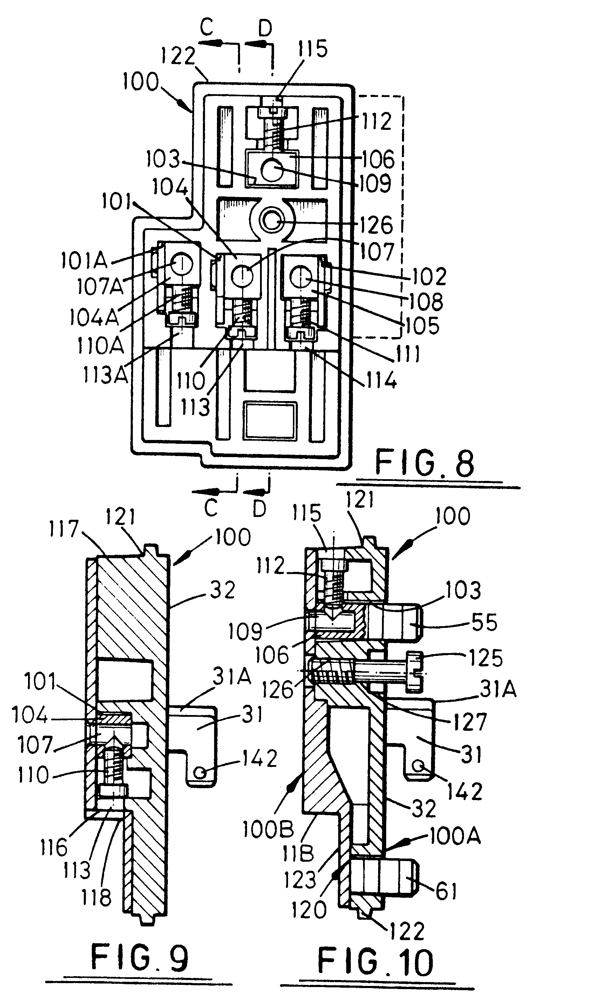

The spring jaw contacts 11, 12, 12A are below extensions of long axes of spaced parallel slots 27, 28, 28A in one major face 30 of the socket unit 10. Referring now also to Figures 8 to 10, the contacts 11,12, 12A will receive correspondingly spaced L-shaped blade contacts (see 31) extending exteriorly of a coupling or plug unit from one face 32 thereof when the faces 30 and 32 are brought together with the blade contacts passed through slot entries 27, 28 28A then slid in the direction of the slots so that the free limbs of the blade contacts go under the socket face 30 and into the contacts 11, 12, 12A.

Reception wells 33, 34, 34A for the blade contacts and having contacts 11, 12 and 12A are shown with those 33, 34 flanking a recess 35 that could be used for a loop-in or other terminal block, though such is actually here shown at 36 with a wire-entry bore 37 and transverse clamp-screw 38 accessible through hole 39 in the other end-wall 26 of the box part 10A. The other well 34A resembles the wells 33, 34 but is displaced to one side of the well 34 to serve the contact 31A.

Aligned with the recess 35 is a further recessed housing 40 for an earthing contact 41 of the socket unit 10. The contact 41 is carried by an earth connection terminal block 42 also with a wire-entry bore 43 and transverse clamp-screw 44 accessible via hole 45 at end 26. This earth terminal block 42 carries the contact 41 via a rivet formation 41A and the contact 41 has a centrally struck-out spring tang 46 from a bent-back base part 47 extending at 48 as an external earth connection to mount screws of accessories or boxes therefor. Effectively, the contact 41 has its base part follow the bottom of the well 40 (actually formed by the cover 10B) and extends at 49 to one side of the block 42.

The loop-in and earth blocks 36 and 42 are shown generally aligned with the blocks 14 and 13m, respectively, in a particularly compact and readily wired socket unit 10, which is recognisable as a unit from our above-mentioned patent application but extended to one side in order to accommodate the parts carrying references subscripted "A".

The contact arrangement 41 is capable of engaging a T-shaped contact 55 external of the coupler or plug unit, which contact is entrant the socket 10 through hole 56 in its face 30 and then slid below edges of a narrower hole part 56A and compresses the resilient tang 46 of the earth contact 41.

Instead of the T-shaped contact 55, a U-shaped contact could be used with the hole 56 modified to have only side-extending slots from its head part, i.e. instead of the narrowed hole 56A.

Collectively, the contacts 31, 31A and 55 give substantial safety and security of location once entrant to and slid into contact engagement in the socket unit 10, and it is advantageous for live parts not to take mechanical loads. Thus, to assure same regardless of the orientation of the socket unit, we show the contact 55 effectively matched at 61 near the other end of the face 32 to cooperate with another hole 62 and extension 62A through the face 30 to a secure accommodation 63 for its head portion with sides thereof below the face 30. Formation 61 could be an integral moulded extension.

We also show safety guides, 64, 65 and 66, 67 and 66A, 67A for the "live" slots 27, 28, 28A actually parts of the sides of the wells 68, 69, 69A beyhond those 33, 34, 34A.

It will be evident that a socket unit 10 is readily mounted in a base unit proper, say held in by a cover plate relative to rebate 75 formed by exterior ribbing 76.

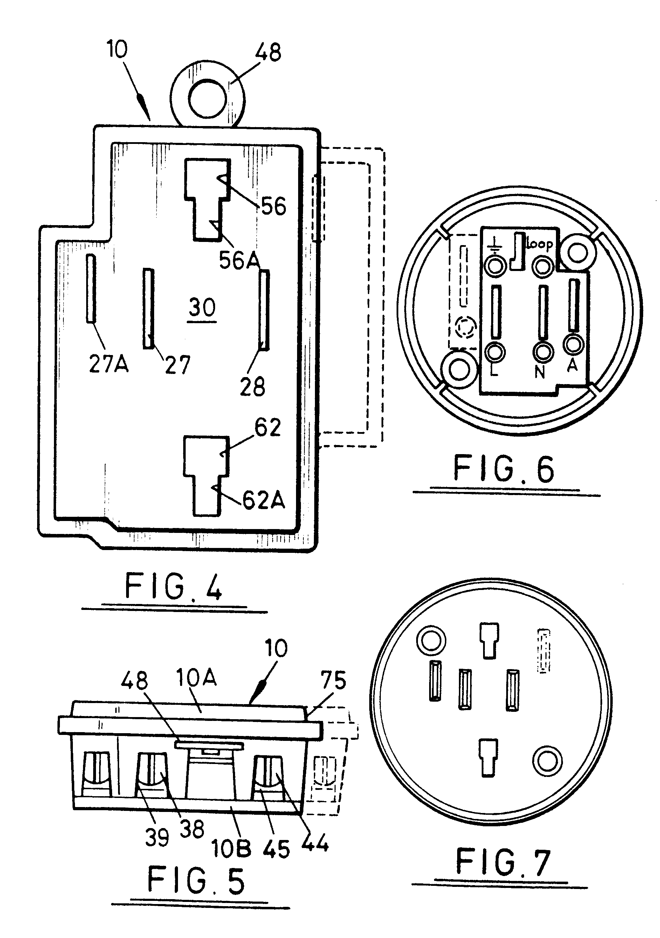

An example of such mounting appears in Figure 6 for a round "ceiling rose" replacement type, but Figure 7 shows integrated socket provision relative to a circular base plate.

Figures 8 to 10 show a coupler or plug unit 100 to fit into an outlet socket accessory hereof, such as a "ceiling rose" replacement then of round generally flattish shape, or in or as a plug for an architrave or box socket. Its major face 32 has "live" contacts 31, 31' and 31A, earth contact 55 of T-shape, and matching projection 61 extending therefrom. The base part 100A is normally associated with a cover part 100B and has an inner chamber structure subdivided to provide wells 101, 101A, 102, 103 for terminal blocks or heads 104, 104A, 105, 106 carrying or of the contacts 55, 31 and 31A. Such terminal blocks are again shown each of the type having wire-accommodating holes 107, 107A, 108, 109 and ttransverese clamp-screws 110, 110A, 111 and 112 accessible through holes 113, 113A, 114, 115 in end-walls 116, 117 of the chamber structure. The T-projection 61 is not shown associated with a terminal block, but is secured at 120 in any suitable way. actually below a stepping 118 of the cover part 100B through which "live" terminal screws are further accessible.

No cord-clamp is indicated, as same may well be provided in the accessory incorporating the plug unit 100 (via rebate 121 and flange 122). However, a cord-clamp could be provided on the lower stepping of the cover part, i.e. at 123, if desired. Fixing means for the plug unit 100 relative to a threaded bore in a part of an accessory is shown by captive screw 125 in shouldered (127) bore 126.

It will be appreciated that the screw 125 could be used to hold the base and cover parts together, though same are preferably more permanently associated, whether by welding or other bonding.

It will also be appreciated that the flange 122 and rebate 121 particularly facilitate incorporation of the plug unit into any plug, ceiling rose replacement, other ceiling lighting fitting, wall light fitting, or whatever.

Reverting to the drawings, the contacts, 11, 12, 12A are shown with pips 140, 141, 141A and the contacts 31, 31', 31A with holes 142 to achieve latching at full sliding engagement. Clearly, other latching means could be used, even applied to the earth terminal 55 and/or projection 61, say as other pips or bumps and recesses relative to their socket contacts or even the socket unit body itself.

For earth connection to the projection 48 relative to screws for fixing a socketed accessory to a mount or box, various additional straps may be provided, say rivetted to the projection 48. Thus. a 180 degrees - extending generally arcuate such additional strap could used for the ceiling accessory of Figure 6 with one long limb and one short limb relative to the projection 48. If desired, the earth contacts could be extended clear through both ends of the socket unit, say to affix directly to fixing screws of an electrical accessory.

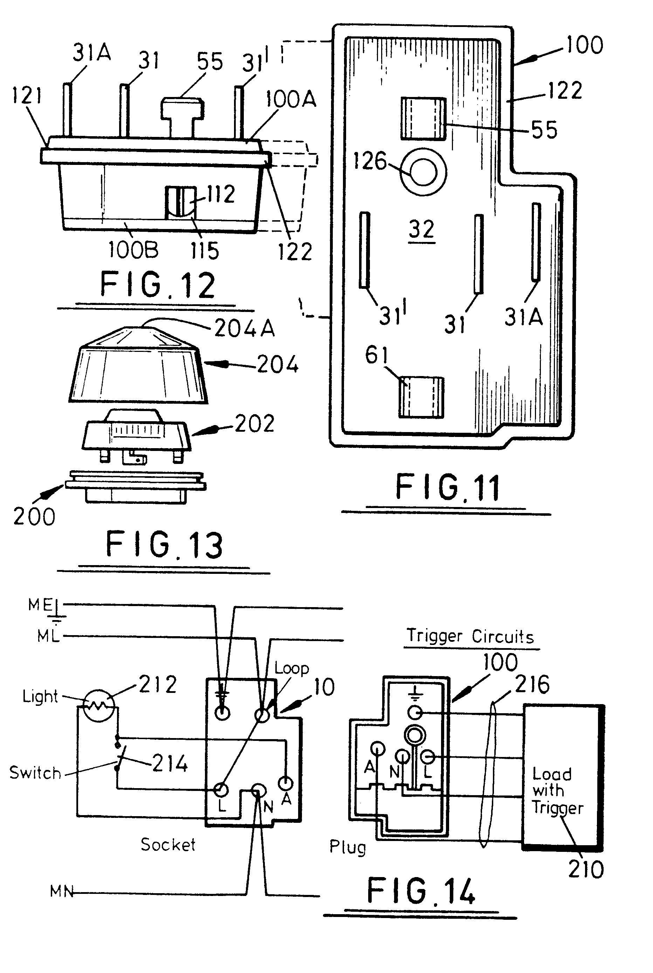

Figure 13 illustrated a ceiling rose type of mains outlet accessory device having four pins as above described. Its box-plate unit 200 is of a type generally similar to that of Figures 6 and 7, i.e. including socket provisions hereof. A plug unit 202 incorporates a plug also as herein described and further within a suitable housing, and a cap 204 is a screw-fit or snap-fit to edge formations of the base plate 200 by way of suitable inner lip formations (not shown). The cap 204 can have the normal outlet for an electric cord (four-wire) by way of an aperture at 204A.

Figure 14 shows one single phase mains electrical installation having a triggerable load 210 and using a socket unit 10 connected to mains supply lines (ML, MN, ME) and to a light unit 212 which is controlled by a switch 214. The mains live feed is shown taken from the loop-in terminal (L) and returned to the auxiliary live feed terminal (A). Plug unit 100 is shown connected to the triggerable load 210 by a four-wire cable or cord 216 for earth and neutral connections for live feeds via both of the normal live auxiliary terminals. A typical application is to toilet lights and associated fan units that go on with the light by triggering action and remain on for a prescribed period after the light goes off.

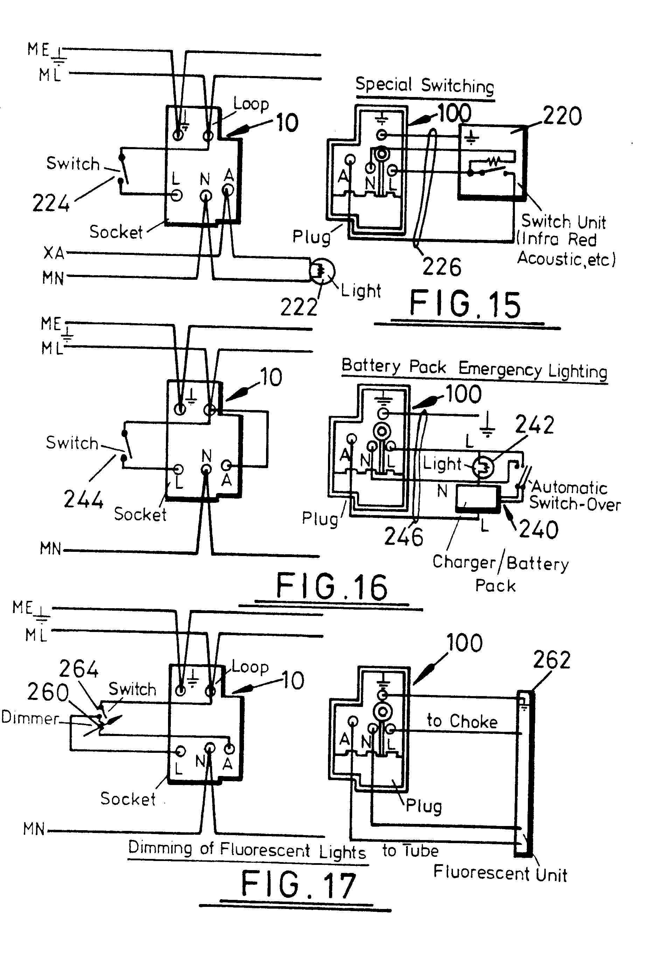

Figure 15 shows another single-phase mains electrical installation having a special switching unit 220 connected to plug unit 100 over a four-wire cable or cord 226. Here, a controlled light 222 is shown connected between neutral and auxiliary live terminals of the socket unit 10. The loop and normal live terminals of the socket 10 are connected by way of a main or isolating switch 224. With the switch 224 in the 'on' state, the light 222 will be controlled by the control unit 220, as may other lights or electrical devices, see line XA. Typical applications are where the control unit provides presence-sensing or other signals to switch the light 222 on or off, for example according to infra-red or ultrasonic sensors.

Figure 16 shows application to single phase mains lighting utilising a light unit 242 having an associated emergency lighting provision (240) of the rechargable battery type that switches over automatically to battery power whenever mains power is lost. Normal operation of the light 242 is by way of switch 244 connected between loop and normal live terminals of the socket. The loop terminal of the socket 10 is also connected directly to its auxiliary live terminal. The composate lighting load 240, 242 also receives all of normal live, neutral and auxiliary live connections from the socket 10 via the plug unit 100. In operation, the switch 244 will control normal on/off of the light 242, but the battery charging pack will always be connected to mains live and neutral via the auxiliary live pin of the plug so that the battery will be kept charged and its automatic switch for emergency lighting held off (usually via a mains relay). At loss of mains power, there will be automatic operation of emergency lighting from battery and that can be regardless of the state of the normal switch 244.

Figure 17 shows application to single phase means lighting for providing dimming of a fluorescent light 262 using a combined dimmer and switch 260, 264. The switch 264 is connected between loop and normal live terminals and the dimmer 260 is connected between normal live and auxiliary live terminals of the socket 10. The fluorescent light is connected with its normal live and choke to auxiliary live and normal live pins of the plug 100. There will thus always be full mains power for striking of the light at switch-on, but continued operation will be in accordance with the dimmer setting.

It will be noted that Figures 1 and 4 to 7, and Figures 8,11 and 12, bear further dashed indication of modification of the above-described four-pin/socket system to a five-pin/socket system. It is to be understood that such dashed indication represents extension of the basic housing etc. of the plug and socket units in a manner substantially identical to what is already referred with sunscripts 'A'. The reason for the location of such dashed extension staggered relative to that shown and subscripted 'A' is to enable accommodation of the resulting socket formation within a British standard ceiling rose plate (see Figure 6). Such fifth pin/socket will permit further extension of application hereof to single-phase mains electrical installation requiring a fifth line (including earth). One application could be to a composite lighting unit with different intensity light devices each requiring separate live and neutral connections, say for circumstances where double-pole switching is required separately for both of supply circuits thereto.

18

CLAIMS

1. A mains electrical outlet system of plug-and-socket type characterised in that mating plug and socket devices afford not only normal live and neutral connections together with any normal earth connection but also an additional connection.

2. A mains electrical outlet system according to claim 1, wherein the plug device has a pin for said additional connection that is similar to one of its other pins for said normal connections, the socket device having corresponding socket entries.

3. A mains electrical outlet system according to claim 1 or claim 2, wherein socket entries of the socket device for receiving pins of the plug device for all said connections are offset from contacts of the socket device so that different relative movement of the plug and socket device is required to and from contact making from that required for separating or first interengaging the plug and socket device.

4. A mains electrical outlet system according to any preceding claim, wherein pins of the plug device for said normal live and neutral connections are L-shaped, and the socket entries of the socket device corresponding to the L-shaped pins of the plug device are parallel elongate apertures and contacts associated with those socket entries are beyond similar ends of those apertures.

5. A mains electrical outlet system according to any preceding claim, wherein a pin of the plug device for said normal earth connection extends sideways at its free end entry therefor into the socket device is correspondingly enlarged at one end.

6. A mains electrical outlet system according to any preceding claim, wherein the plug device has a further shaped projection and the socket device has a corresponding entry, said projection and pins of the plug device rendering the plug device captive on the socket device when electrical contacts are made.

7. A mains electrical outlet system according to any preceding claim, wherein pins of the plug device for said live and neutral connections are spaced in one direction and its pin for said additional connection is further spaced at least in the same direction, the socket device having corresponding socket entries.

8. A mains electrical outlet system according to any preceding claim, wherein the additional connection is an additional live supply connection.

9. A mains electrical outlet system according to any

20

preceding claim, wherein the socket device further includes a loop in connection terminal for live mains feed.

10. An electrical installation comprising at least one outlet system as claimed in any preceding claim, wherein the plug and socket devices thereof are connected with the socket device whose terminals are connected to receive normal live and netural electrical feeds of single phase mains supply and affording outlet connections for same plus an additional mains live via the plug device and a cord or cable connected thereto, the socket terminals and the cord or cable wires being connected relative to load means, switch means and further control means for load operation purposes.

11. An electrical installation according to claim 10, wherein the normal mains feed is to a loop-in terminal and the switch means is connected in a circuit including the loop-in terminal and the normal live terminal of the socket.

12. An electrical installation according to claim 11, wherein the switch means is connected in series with a first load between the loop-in and normal neutral terminals of the socket device via the normal live terminal thereof, the switch means further being in series with the normal live and additional live terminals of the socket device, and the further control means is triggerable to control a second load, the further control means being connected to the plug cable or cord for triggered operation by the switch means.

13. An electrical installation according to claim 11, wherein the the switch means is connected between the loop-in and normal live terminals of the socket device, the load is connected between additional live and normal neutral terminals of the socket device, and the further control means is operable to control the load.

14. An electrical installation according to claim 11, wherein the load means is a mains light with emergency battery-powered light, the loop-in terminal of the socket device being connected to the auxiliary live terminal thereof, and the load means being connected to the cord or cable from the plug device.

15. An electrical installation according to claim 11, wherein the load is a fluorescent light device and the control device is a dimmer, the switch means being connected between the loop-in and normal live terminals of the socket device and the dimmer being connected between the normal and additional live terminals of the socket and the fluorescent light device is connected to the cord or cable from the plug device.

FIG. 1

FIG. 2

FIG. 3

FIG.4

FIG.5

FIG.6

FIG.7

FIG. 8

FIG. 9

FIG. 10

**FIG.12**

**FIG.11**

**FIG.13**

**FIG.14**

0221672

Special Switching

FIG.15

Battery Pack Emergency Lighting

FIG.16

Dimming of Fluorescent Lights

FIG.17